# EUROPÄISCHE PATENTSCHRIFT

(11) **EP 1 930 640 B1**
(45) Veröffentlichungstag und Bekanntmachung des Hinweises auf die Patenterteilung: **24.02.2010**
(21) Anmeldenummer: 07120970.4
(22) Anmeldetag: 19.11.2007
(51) Int. Cl.: F16L 13/14, F16L 33/207

(54) **Fitting für ein Rohr, insbesondere Kunststoffrohr oder Kunststoff-/Metall-Verbundrohr**
Fitting for a pipe, in particular plastic pipe or plastic-metal composite pipe
Raccord pour un tuyau, en particulier un tuyau en plastique ou un tuyau en alliage de plastique et de métal

(30) Priorität: 06.12.2006 DE 102006057418
(43) Veröffentlichungstag der Anmeldung: 11.06.2008
(73) Patentinhaber: Uponor Innovation AB, 513 81 Fristad (SE)
(72) Erfinder: Dittmar, Rainer, 97532, Üchtelhausen (DE)
(74) Vertreter: Epping - Hermann - Fischer

(56) Entgegenhaltungen:
- EP-A- 1 265 018
- EP-A- 1 265 019
- EP-A- 1 486 713
- EP-A- 1 775 507
- WO-A-03/064912
- DE-U1- 20 221 504

## Beschreibung

Die Erfindung betrifft einen Fitting für ein Rohr, wobei es sich bei dem Rohr insbesondere um ein Kunststoffrohr oder ein Kunststoff-/Metall-Verbundrohr handelt.

Fittinge für Rohre in Form von Pressfittingen oder Schraub-/Kiemm-Fittingen sind grundsätzlich bekannt und haben sich in der Praxis bewährt. Diese Art von Fittingen wird insbesondere bei Kunststoffrohren oder Kunststoff-/Metall-Verbundrohren eingesetzt. Die Fittinge verfügen über einen Fittingkörper, der eine Stützhülse aufweist, auf die das Ende eines anzuschließenden Rohres aufschiebbar ist. Die Stützhülse weist an ihrer Außenseite mehrere umlaufende Rippen auf. Ferner kann die Stützhülse ein Dichtelement aufweisen, das zumeist in Form eines O-Ringes vorliegt. Durch eine Verpressung oder eine Klemmverschraubung wird das auf die Stützhülse aufgeschobene Rohrende gegen die Stützhülse und damit gegen die Rippen und zwischen diese gepresst, wodurch einerseits die Dichtigkeit und andererseits eine Zugentlastung erfolgt.

In der Praxis kann der Fall eintreten, dass bei der Installation ein auf eine Stützhülse aufgeschobenes Rohrende versehentlich nicht ausreichend stark verpresst wird, Dies sollte bei einer Wasserdichtigkeitsprüfiung (Druckprobe) der installierten Rohrleitung sichtbar werden, indem an diesem Fitting Wasser austritt. Leider kann aber ein unverpresster Fitting dennoch dicht abschließen, wenn nämlich sein Dichtungselement beispielsweise toleranzbedingt mit einer zum dichten Abschluss ausreichenden Anpresskraft anliegt.

Deshalb existieren im Stand der Technik Pressfittinge, die über eine "Zwangsundichtigkeit" verfügen, wenn das anzuschließende Rohr lediglich lose auf die Stützhülse aufgeschoben ist, ohne mit der Stützhülse verpresst zu sein. So ist es beispielsweise aus EP-B-1 278 001, EP-A-1 251 304 und DE-C-102 17 824 bekannt, das anzuschließende Rohrende mit Hilfe eines Werkzeuges an der Innenseite derart zu verformen, dass sich zwischen Stützhülse und der Innenseite des Rohres ein Spalt ergibt, wenn das Rohr, ohne verpresst zu sein, lediglich lose auf die Stützhülse aufgeschoben ist. Nachteilig an diesem Vorschlag ist, dass das Rohrende vor dem Aufschieben auf die Stützhülse zunächst noch bearbeitet werden muss. Aus EP-B-1 171 731, DE-C-101 64 568 und DE-U-203 00 918 ist es bekannt, an dem Fitting im Bereich eines außenliegenden Dichtrings einen Spalt vorzusehen, wenn das Rohr, ohne verpresst zu sein, in den Fitting eingeschoben ist.

Ferner ist es aus EP-A-1 265 018 und EP-A-1 265 019 bekannt, quer zu den umlaufenden Rippen der Stützhülse einen Spalt vorzusehen, indem beispielsweise die Rippen innerhalb eines schmalen Winkelbereichs abgeflacht oder mit einer Längsnut versehen werden. Da die Nut bzw. Abflachungen parallel zur axialen Erstreckung der Stützhülse verlaufen, ist deren Wandung über die gesamte axiale Erstreckung der Stützhülse in ein und demselben Winkelbereich geschwächt, was nachteilig sein kann.

Schließlich ist ein Fitting für Rohrleitung aus EP-A-1 775 507 (Dokument nach Art. 54(3) EPÜ) bekannt. Der Fitting ist mit einer Stützhülse versehen, die an ihrer Außenseite mehrere umlaufende Halterippen aufweist. In jeder Halterippe ist zumindest ein axialer Strömungskanal ausgebildet, wobei der Strömungskanal in der einen Halterippe versetzt zu dem Strömungskanal in der anderen Halterippe angeordnet ist.

Aufgabe der Erfindung ist es, einen Fitting für ein Rohr zu schaffen, der eine Stützhülsenkonfiguration aufweist, welche für eine Zwangsundichtigkeit bei einem nur lose aufgeschobenen Rohr sorgt, dessen mechanische Festigkeit jedoch über den gesamten Umfang konstant ist.

Zur Lösung dieser Aufgabe wird mit der Erfindung ein Fitting für ein Rohr, insbesondere für ein Kunststoffrohr oder Kunststoff-/Metall-Verbundrohr vorgeschlagen, wobei der Fitting versehen ist mit
- einem Fittingkörper, der eine Stützhülse aufweist, auf die das Ende eines anzuschließenden Rohres aufschiebbar ist,
- wobei die Stützhülse an ihrer Außenseite mehrere umlaufende Rippen aufweist.

Bei diesem Fitting ist erfindungsgemäß vorgesehen,
- dass die Rippen Außenflächen aufweisen, die längs einer von einem Kreis abweichenden Umfangslinie verlaufen und jeweils einen ellipsenförmigen bzw. ovalförmigen Verlauf aufweisen, und
- dass benachbarte Rippen in Umfangsrichtung gegeneinander versetzt angeordnet sind.

Der erfindungsgemäße Fitting weist an seiner Stützhülse außenliegende, umlaufende Rippen auf, die einen Außenflächenverlauf aufweisen, der von einer Kreislinie abweicht. Benachbarte Rippen mit einem von einem Kreis bzw. einer Zylinderfläche abweichenden Umfang sind nun erfindungsgemäß in Umfangsrichtung versetzt gegeneinander angeordnet. Insbesondere weisen die Rippen einen ellipsenförmigen Verlauf auf.

Dadurch, dass jede Rippe von der Kreisform abweicht, bildet sich zwischen jeder Rippe und der Innenseite eines auf die Stützhülse aufgeschobenen Rohres ein Spalt. Die Spalte zwischen den einzelnen Rippen und der Innenseite des Rohres sind in Umfangsrichtung versetzt zueinander angeordnet, so dass bei der Druckprüfung Wasser zuverlässig austreten kann, um somit sichtbar zu machen, dass das Rohr nicht ordnungsgemäß angeschlossen ist. Durch den Umfangsversatz der Spalte von Rippe zu Rippe wird die Wanddicke der Stützhülse nicht mehr entlang einer zur Achse der Stützhülse parallelen Linie, sondern längs einer Schraubenlinie verringert, so dass die Stützhülse über 360° eine ausreichende Stabilität und Festigkeit gegenüber den beim Pressvorgang auftretenden Kräften aufweist.

Zweckmäßig ist es, wenn die Stützhülse mindestens einen Dichtring aufweist. Dieser Dichtring ist von einer Aufnahmenut der Stützhülse aufgenommen, wobei es vorteilhaft ist, wenn der Dichtring über die Aufnahmenut radial nicht übersteht. Damit wird erreicht, dass der Dichtring nicht über 360° in Anlage mit der Innenseite des Rohres gelangt, sofern dieses noch nicht verpresst ist.

Die Erfindung wird nachfolgend anhand eines Ausführungsbeispiels unter Bezugnahme auf die Zeichnung näher erläutert. Im Einzelnen zeigen dabei:

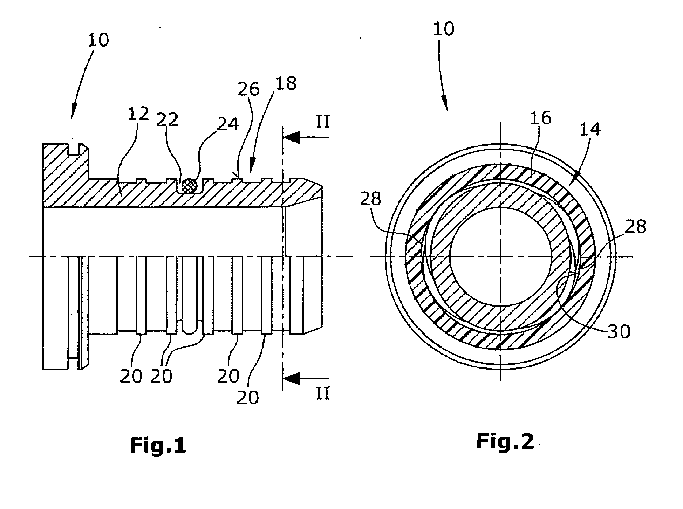

- Fig. 1: einen Halbschnitt durch einen Fittingkörper und
- i;'ig, 2: einen Schnitt entlang der Linie II-II der Fig. 1, wobei außen um den Fitting bzw. dessen Stützhülse ein Rohr angedeutet ist.

Fig. 1 zeigt einen Halbschnitt durch den Fittingkörper 10 eines Pressfittings, der neben dem Fittingkörper 10 eine (nicht dargestellte) Presshülse aufweist, was an sich bekannt ist.

Der Fittingkörper 10 weist eine Stützhülse 12 auf, auf die das Ende 14 eines anzuschließenden Rohres 16 geschoben wird (siehe Fig. 2). Die Stützhülse 12 weist an ihrer Außenseite 18 eine Profilierung auf, und zwar in Form von umlaufenden Rippen 20. Ferner ist die Außenseite 18 der Stützhülse 12 mit einer umlaufenden Aufnahmenut 22 versehen, in der sich ein elastomerer Dichtring 24 befindet, der versenkt in der Aufnahmenut 22 angeordnet ist, also radial nicht über die beiden die Aufnahmenut 22 axial begrenzenden Rippen 20 übersteht, sondern maximal mit deren Außenflächen 26 fluchtet.

Wie insbesondere anhand von Fig. 2 zu erkennen ist, weisen die Rippen 20 Ellipsenform bzw. Ellipsenquerschnitte auf, wobei benachbarte Rippen 20 in Umfangsrichtung versetzt gegeneinander angeordnet sind. Die Dimensionen der elliptischen Rippen 20 sind dabei so gewählt, dass der größere der beiden Ellipsendurchmesser im wesentlichen gleich dem Innendurchmesser des anzuschließenden Rohres 16 ist. Dadurch ergibt sich in denjenigen Bereichen, in denen der Außendurchmesser der elliptischen Rippen 20 kleiner als der Innendurchmesser des anzuschließenden Rohres 16 ist, ein Spalt 28 zwischen den Rippen 20 und der Innenseite 30 des anzuschließenden Rohres 16. Durch diese Spalte gelangt nun bei einer Druckprüfung zuverlässig Wasser, wenn das anzuschließende Rohr 16 lediglich auf die Stützhülse 12 geschoben ist, ohne mit ihr verpresst zu sein. Im verpressten Zustand wird das Rohr 16 durch radial von außen wirkende Kräfte gestaucht und damit zuverlässig gegen die oval- bzw. ellipsenförmigen Rippen 20 gepresst. Somit ist im verpressten Zustand der Dichteanschluss des Rohres 16 am Fittingkörper 10 bzw. an der Außenseite 18 seiner Stützhülse 12 gewährleistet.

Der Vorteil der in Umfangsrichtung versetzten elliptischen bzw. ovalen Rippen 20 ist darin zu sehen, dass die Wandung der Stützhülse 12 nicht über deren gesamte Länge in einem einzigen Umfangswinkelbereich reduziert ist. Vielmehr liegen die im Durchmesser reduzierten Bereiche der elliptischen Rippen 20 auf einer Schraubenlinie um die Stützhülse 12 herum, was garantier-fi, dass die Stützhülse 12 über 360° ausreichend stabil ist, um den Andruckkräften des Rohres beim Verpressen widerstehen zu können.

Der Fittingkörper 10 weist zweckmäßigerweise Kunststoff auf bzw. zumindest seine Stützhülse 12 besteht aus Kunststoff. Gerade bei diesen Materialien ist eine Mindestwanddicke erforderlich, um den Anpresskräften Genüge leisten zu können. Es ist also wichtig, dass die zur Realisierung der Funktion "Undichtigkeit vor Verpressung" vorgesehene Wanddickenreduktion sich nicht an jedem Punkt in axialer Erstreckung der Stützhülse 12 in ein und demselben Umfangswinkeibereich befindet, sondern, wie nach der Erfindung vorgesehen, entlang der Längserstreckung der Stützhülse 12 in unterschiedlichen Umfangswinkelbereichen ausgebildet ist.

## Patentansprüche

1. Fitting für ein Rohr, insbesondere Kunststoffrohr oder Kunststoff-/Metall-Verbundrohr mit
- einem Fittingkörper (10), der eine Stützhülse (12) aufweist, auf die das Ende eines anzuschließenden Rohres (16) aufschiebbar ist,
- wobei die Stützhülse (12) an ihrer Außenseite (18) mehrere umlaufende Rippen (20) aufweist,
**dadurch gekennzeichnet,**
- **dass** die Rippen (20) Außenflächen (26) aufweisen, die längs einer von einem Kreis abweichenden Umfangslinie verlaufen und jeweils einen ellipsenförmigen bzw. ovalförmigen Verlauf aufweisen, und
- **dass** benachbarte Rippen (20) in Umfangsrichtung gegeneinander versetzt angeordnet sind.

2. Fitting nach Anspruch 1, **dadurch gekennzeichnet, dass** die Stützhülse (12) mindestens einen Dichtring (24) und eine diesen aufnehmenden Aufnahmenut (22) aufweist und dass der Dichtring (24) radial nicht über die Aufnahmenut (22) übersteht.

## Claims

1. Fitting for a pipe, in particular plastic pipe or plastic/metal composite pipe, comprising
- a fitting body (10) having a support sleeve (12) onto which the end of a pipe to be connected (16) can be slid,
- wherein the support sleeve (12) comprises several ribs (20) around the circumference of its outer side (18),
**characterized in that**
- the ribs (20) comprise external surfaces (26) which run along a circumferential line deviating from a circle and which each comprise an elliptical and/or oval curve, and
- adjacent ribs (20) are offset with respect to one another in circumferential direction.

2. Fitting according to claim 1, **characterized in that** the support sleeve (12) comprises at least one sealing ring (24) and a receiving groove (22) holding said sealing ring and that the sealing ring (24) does not radially protrude beyond the receiving groove (22).

## Revendications

1. Raccord pour un tuyau, en particulier un tuyau en matière plastique ou un tube d'assemblage en matière plastique ou en métal avec
- une boîte de raccord (10) comportant une cosse de support (12) sur laquelle le bout d'un tuyau à raccorder (16) peut être poussé,
- la cosse de support (12) comportant plusieurs renforts circulants (20) sur son côté extérieur,
**caractérisés en ce que**,
- les renforts (20) comportent des zones extérieures (26) qui côtoient une ligne de circonférence qui dévie d'un cercle et ont un déroulement elliptique ou bien ovale, et que
- des renforts voisins (20) sont arrangés en direction de circonférence, décalés l'un contre l'autre

2. Raccord selon la revendication 1, **caractérisé en ce que** la cosse de support (12) comporte au moins un joint torique (24) et une rainure d'absorption (22) absorbant le joint torique (24) et que le joint torique (24) ne surmonte pas radialement la rainure d'absorption (22).
